(19) Europäisches Patentamt
European Patent Office
Office européen des brevets

(11) **EP 2 826 200 B1**

(12) **FASCICULE DE BREVET EUROPEEN**

(45) Date de publication et mention de la délivrance du brevet:
**11.05.2016 Bulletin 2016/19**

(51) Int Cl.:
*H04L 9/30* *(2006.01)*    *H04L 9/32* *(2006.01)*
*G06K 9/00* *(2006.01)*

(21) Numéro de dépôt: **13709214.4**

(86) Numéro de dépôt international:
**PCT/EP2013/055297**

(22) Date de dépôt: **14.03.2013**

(87) Numéro de publication internationale:
**WO 2013/135846 (19.09.2013 Gazette 2013/38)**

(54) **PROCEDE DE CRYPTAGE D'UNE PLURALITE DE DONNEES EN UN ENSEMBLE SECURISE**

VERFAHREN ZUR VERSCHLÜSSELUNG EINER VIELZAHL VON DATEN IN EINEM SICHEREN DATENSATZ

METHOD FOR ENCRYPTING A PLURALITY OF DATA IN A SECURE SET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2012 FR 1252365**

(43) Date de publication de la demande:
**21.01.2015 Bulletin 2015/04**

(73) Titulaire: **Morpho**
**92130 Issy-les-Moulineaux (FR)**

(72) Inventeurs:
• **BRINGER, Julien**
**F-92130 Issy les Moulineaux (FR)**
• **CHABANNE, Hervé**
**F-92130 Issy les Moulineaux (FR)**

(74) Mandataire: **Regimbeau**
**20, rue de Chazelles**
**75847 Paris Cedex 17 (FR)**

(56) Documents cités:
• ARI JUELS ET AL: "A Fuzzy Vault Scheme", DESIGNS, CODES AND CRYPTOGRAPHY, KLUWER ACADEMIC PUBLISHERS, BO, vol. 38, no. 2, 1 février 2006 (2006-02-01), pages 237-257, XP019205891, ISSN: 1573-7586, DOI: 10.1007/S10623-005-6343-Z cité dans la demande
• MASAO KASAHARA: "A generalization of Secret Sharing Scheme on the Basis of Recovering Algorithm, K-RA", INTERNATIONAL ASSOCIATION FOR CRYPTOLOGIC RESEARCH,, vol. 20070323:100353, 23 mars 2007 (2007-03-23), pages 1-7, XP061002281,
• EE-CHIEN CHANG ET AL: "Secure Sketch for Multi-Sets", INTERNATIONAL ASSOCIATION FOR CRYPTOLOGIC RESEARCH,, vol. 20060315:181400, 15 mars 2006 (2006-03-15), pages 1-5, XP061001775,

EP 2 826 200 B1

**Description**

DOMAINE DE L'INVENTION

L'invention concerne le domaine du cryptage de données, et de la comparaison des données cryptées à une donnée candidate pour l'évaluation des similitudes entre l'une des données cryptées et la donnée candidate.

L'invention est applicable notamment au domaine de la biométrie, pour le cryptage de données biométriques d'individus, et l'identification d'un individu candidat par comparaison de l'une de ses données biométriques aux données cryptées.

ETAT DE LA TECHNIQUE

On connait déjà un procédé de cryptage d'une donnée connu sous le nom de schéma « fuzzy vault », ce procédé ayant été décrit dans les articles suivants :

- Ari Juels and Madhu Sudan, A fuzzy vault scheme. In Proceedings of IEEE Internation Symposium on Information Theory, ISIT, Lecture Notes in Computer Science, page 408, 2002, et
- Ari Juels and Madhu Sudan, A fuzzy vault scheme. Des. Codes Cryptography, 38(2) :237-257, 2006

Le schéma « fuzzy vault » consiste à intégrer dans un ensemble mathématique appelé en anglais « fuzzy vault » (« conteneur flou »), et nommé dans la présente « ensemble protégé », des informations liées à une donnée A, ainsi que des informations supplémentaires, parasites, qui sont générées aléatoirement et indépendantes de la donnée A. Ces informations parasites permettent de masquer les informations liées à A.

Plus précisément, ce cryptage s'applique à une donnée A sous la forme d'une liste d'éléments indexés $a_i$ d'un corps fini F.

Au cours de ce procédé, on génère de façon aléatoire un polynôme p présentant certaines propriétés mathématiques non décrites ici, et, pour chaque élément $a_i$ de A, on calcule l'image par p de l'élément $a_i$.

On ajoute ensuite à l'ensemble protégé les couples constitués des éléments ai de la donnée A et de leur images par p.

Et enfin, on ajoute dans l'ensemble protégé des points inducteurs d'erreurs, ces points étant des couples $(x_i, X_i')$ générés aléatoirement, tels que $X_i$ n'est pas un élément de A, et $X_i'$ n'est pas l'image par p de $X_i$. Mathématiquement, $x_i \in F \backslash A, x_i' \in F \backslash \{p(x_i)\}$.

On obtient donc un ensemble de couples $(x_i^*, x_i^{*\prime})$, dans lesquels, soit les abscisses $x_i^*$ appartiennent à A et $x_i^{*\prime} = p(x_i^*)$, soit elles appartiennent à $F \backslash A$ et dans ce cas $x_i^{*\prime}$ sont choisis dans $F \backslash p(A)$.

L'ajout d'un nombre important de points inducteurs d'erreur permet de masquer les points liés à la donnée A et au polynôme p.

On utilise ensuite l'ensemble protégé pour comparer une seconde donnée B à la donnée A, sans obtenir d'informations sur ladite donnée A.

Pour ce faire, des algorithmes de décryptage ont été développés, permettant de comparer une donnée B, sous forme d'une liste d'éléments $b_i$ indexés, à l'ensemble protégé, afin de déterminer si la donnée B correspond à la donnée A avec un taux de similarité excédant un seuil prédéterminé.

En particulier, B correspond à A si un nombre important d'éléments bi correspondent à des éléments ai de A, ces derniers éléments se trouvant par définition dans l'ensemble protégé.

Ces algorithmes de décryptage ont pour argument les éléments bi de la donnée B qui correspondent à des abscisses $X_i$ de l'ensemble protégé, et pour résultat un polynôme p'. Si B correspond suffisamment à A, le polynôme p' est le polynôme p qui a servi au cryptage de la donnée A.

On peut alors appliquer à l'ensemble des éléments bi de B correspondant à des abscisses $X_i$ de l'ensemble protégé ce polynôme p pour déterminer quels éléments $b_i$ sont aussi des éléments $a_i$ de A, puisque par construction seuls les couples comprenant un élément et une image de cet élément par p sont des éléments de A.

Un exemple d'algorithme de décryptage adapté est de type décryptage d'un code de Reed-Solomon.

Le schéma fuzzy-vault permet donc de comparer deux données sans obtenir d'information sur l'une des données.

Cependant, il se limite à la comparaison de deux données, et ne peut être appliqué à la comparaison d'une donnée à un ensemble de plusieurs données d'une banque de données. Ce type de comparaison est pourtant employé de plus en plus fréquemment, notamment dans le cadre de l'identification biométrique d'individus.

Il existe donc un besoin pour étendre le principe du schéma fuzzy-vault à une pluralité de données d'une banque de données, de façon à permettre la comparaison des données de la banque à une tierce donnée, sans obtenir d'informations sur celles-ci.

PRESENTATION DE L'INVENTION

Un but de l'invention est de pallier le problème évoqué ci-avant.

Ce but est atteint dans le cadre de la présente invention, grâce à un procédé de cryptage d'un ensemble d'au moins deux données indexées mis en oeuvre par un serveur, les données étant sous la forme de listes d'éléments, dont chaque élément appartient à un ensemble fini de symboles indexés appelé alphabet, le procédé étant caractérisé en ce que les données sont cryptées pour former un ensemble protégé, l'étape de cryptage et de création de l'ensemble protégé comprenant les étapes suivantes :

- le serveur génère aléatoirement, pour chaque donnée de la base, une fonction d'encodage correspondante, et
- pour chaque symbole de l'alphabet,

  o pour chaque donnée,

    ◾ si au moins un élément de la liste qui constitue la donnée est le symbole de l'alphabet, le serveur détermine l'image dudit symbole de l'alphabet par la fonction d'encodage correspondant à la donnée pour obtenir une coordonnée d'un mot de code, fonction de la donnée et du symbole de l'alphabet,
    ◾ le serveur ajoute la coordonnée de mot de code ainsi obtenue à un ensemble indexé correspondant à l'élément de l'alphabet, l'ensemble étant de cardinal prédéterminé,

  o puis, le serveur réindexe aléatoirement les éléments de l'ensemble indexé correspondant au symbole de l'alphabet, et
  o le serveur ajoute à l'ensemble protégé l'ensemble indexé correspondant au symbole de l'alphabet.

Avantageusement, mais facultativement, l'invention peut en outre comprendre au moins l'une des caractéristiques suivantes :

- pour chaque symbole de l'alphabet, préalablement à l'étape de réindexation, le serveur complète l'ensemble indexé correspondant à l'élément de l'alphabet avec des points inducteurs d'erreurs.
- pour les symboles de l'alphabet ne correspondant à aucun élément des données de la base,

  o le serveur sélectionne aléatoirement certains desdits éléments,
  o pour chaque élément sélectionné, il crée un ensemble de cardinal prédéterminé d'index correspondant à celui de l'élément, et il ajoute à cet élément autant de points inducteurs d'erreur que le cardinal de l'élément.

- les symboles de l'alphabet non sélectionnés sont associés à un ensemble vide.
- les points inducteurs d'erreurs sont des points générés aléatoirement parmi un ensemble de destination des fonctions d'encodage, privé des images des symboles de l'alphabet par les fonctions d'encodage correspondant aux données.
- les fonctions d'encodage correspondant aux données sont associées à un code d'évaluation pour lequel il existe au moins un algorithme de récupération de liste.

- le code d'évaluation est un code de Reed-Solomon replié, un code de Reed-Muller, ou un code algébrique.
- le serveur calcule l'image de chaque fonction d'encodage correspondant à une donnée par une fonction de hachage publique, et ajoute ladite image à l'ensemble protégé.
- les données sont des données biométriques.
- les données biométriques comprennent des informations relatives aux empreintes digitales d'individus, lesdites données étant sous la forme de listes de triplets (x, y, θ) de coordonnées de minuties d'empreintes digitales des individus.
- chaque coordonnée d'un triplet (x, y, θ) est codée sur un octet, et l'alphabet contient l'ensemble des configurations possibles de triplets dont chaque coordonnée est codée sur un octet.

L'invention concerne en outre un procédé d'identification d'un individu, dans un système comprenant un serveur de contrôle, adapté pour acquérir une donnée biométrique de l'individu à identifier, et un serveur de gestion d'une base de données biométriques indexées d'individus répertoriés,

dans lequel, pour identifier l'individu, on compare sa donnée avec les N données de la base, afin d'identifier la ou les données de la base présentant un taux de similarités avec la donnée de l'individu excédant un seuil prédéterminé,

le procédé étant caractérisé en ce que, avant l'étape de comparaison de la donnée de l'individu avec les données de la base, celles-ci sont cryptées par le serveur de gestion par mise en oeuvre du procédé selon l'une des revendications précédentes.

Avantageusement, mais facultativement, le procédé d'identification selon peut en outre comprendre au moins l'une des caractéristiques suivantes :

- la donnée biométrique de l'individu à identifier est sous la forme d'une liste d'éléments dont chaque élément est un symbole de l'alphabet, et dans lequel le serveur de gestion communique l'ensemble protégé au serveur de contrôle, et, à partir de la donnée biométrique de l'individu à identifier, le serveur de contrôle met en oeuvre une étape de décryptage de l'ensemble protégé, l'étape de décryptage comprenant les étapes consistant à :

  o sélectionner un sous-ensemble de l'ensemble protégé comprenant tous les ensembles indexés correspondant aux symboles de l'alphabet présents dans la liste d'éléments qui constitue la donnée de l'individu,
  o mettre en oeuvre un algorithme de recouvrement de liste ayant pour argument ledit sous-ensemble sélectionné et pour résultat un ensemble de fonctions d'encodage tel que, si la donnée de l'individu correspond à une donnée de la base, l'ensemble de fonctions d'encodage contient la fonction d'encodage correspondant à ladite donnée.

- à partir de la ou des fonctions d'encodage obtenues, le serveur de contrôle détermine la ou les données de la base correspondant à la donnée de l'individu avec un taux de similarité supérieur à un seuil prédéterminé.
- le serveur de contrôle détermine l'image des fonctions d'encodage de l'ensemble résultant de l'algorithme de récupération de liste par la fonction de hachage publique, et compare cette image aux images des fonctions d'encodage correspondant aux données de la base contenues dans l'ensemble protégé.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1a représente les étapes du procédé de cryptage proposé par l'invention.
- La figure 1b est l'algorithme mettant en oeuvre les premières étapes du procédé.
- La figure 2 représente les étapes du procédé de décryptage,
- La figure 3 représente schématiquement la mise en oeuvre du procédé d'identification selon l'invention,
- Les figures 4a, 4b, et 4c représente les conventions utilisées pour le codage d'une empreinte digitale d'un individu.

## DESCRIPTION DETAILLEE D'AU MOINS UN EXEMPLE DE MISE EN OEUVRE

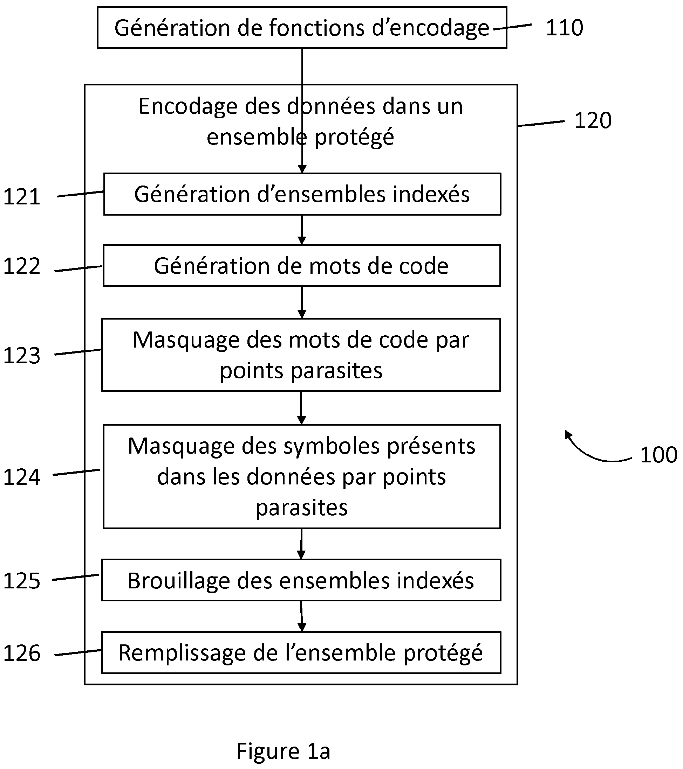

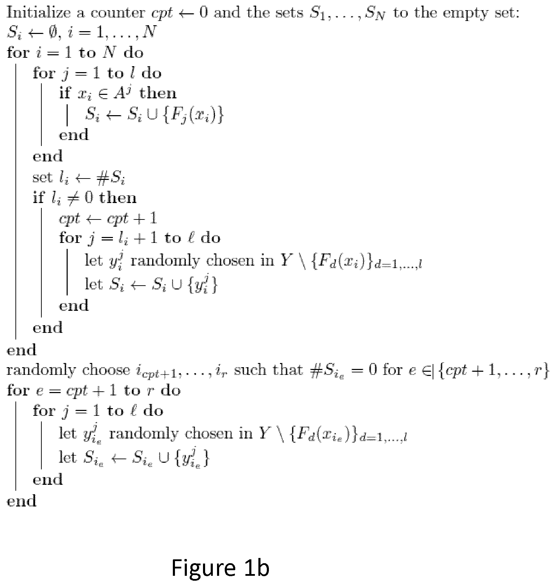

On a décrit en référence à la figure 1 les principales étapes d'un procédé de cryptage d'une pluralité de données $A_j$ d'une base de données DB.

### Notations et vocabulaire

La base de données DB contient un nombre n de données secrètes $A^j$ (j=1..n), chaque donnée $A^j$ se présentant sous la forme d'une liste d'éléments, par exemple de t éléments indexés $a_i^j$, i=1..t, de sorte que chaque $A^j$ s'écrit $A^j = (a_1^j, .., a_t^j)$. Alternativement, les données $A^j$ peuvent être de tailles différentes les unes des autres.

Les éléments $a_i^j$ de chaque $A^j$ sont de préférences des éléments binaires ou des vecteurs dont chaque coordonnée est un élément binaire.

La présente invention s'inscrit dans la théorie des codes, qui emploie certains objets mathématiques dont on redonne ici les définitions.

On appelle ε un alphabet, c'est-à-dire un ensemble contenant N symboles $X_1... X_N$, tel que chaque élément de la donnée $A^j$ est un symbole de l'alphabet ε. Cet alphabet est défini en fonction de la façon dont sont codées les données $A^j$.

Ainsi par exemple, si les éléments des données $A^j$ sont des valeurs codées sur un certain nombre de bits, l'alphabet ε comprend l'ensemble des codes binaires codés sur ce nombre de bits. Pour des données $A^j$ codées sur un octet, l'alphabet ε comprend les deux-cent cinquante-six (256) octets possibles.

On définit également une fonction d'évaluation de la façon suivante :

- soit D un ensemble fini,
- soient $P_1...P_N$, N points distincts de coordonnées prises dans D,
- soit P un sous-ensemble de l'ensemble des fonctions du produit cartésien D*...*D à valeurs dans un ensemble Y, Y pouvant être par exemple l'ensemble D,
- une fonction d'évaluation *ev* est définie par

$$ev: \quad P \to Y^N$$
$$f \mapsto (f(P_1), ..., f(P_N)).$$

En outre, si $L_k$ est un sous-ensemble de P de dimension k, on appelle $C = ev(L_k)$ un code d'évaluation défini par $L_k$. On dit que C est un code d'évaluation sur Y de longueur N et de dimension *k*.

On appelle enfin mot de code un élément du code C, c'est-à-dire l'évaluation d'une fonction f par la fonction d'évaluation *ev(f)*.

### Cryptage des données de la base

Le cryptage 100 des données $A^j$ de la base est effectué par la mise en oeuvre, par un serveur informatique, des étapes identifiées en figure 1.

### Génération des fonctions d'encodage

Au cours de l'étape 110, un serveur génère aléatoirement, pour chaque donnée $A^j$ de la base, une fonction d'encodage $F_j$ correspondante.

On appelle fonction d'encodage une fonction qui à un élément associe une coordonnée d'un mot de code.

Dans le cas présent, on choisit des fonctions d'encodage $F_j$ associées à un code d'évaluation pour lequel il existe un algorithme de récupération de liste.

Par exemple, on connait les codes de Reed-Muller, les codes algébriques comme les codes de Goppa, ou encore les codes connus en anglais sous le nom « folded Reed-Solomon codes », traduits ici par codes de Reed-Solomon « repliés ».

Dans le cadre de la présente invention, on utilise avantageusement un code de Reed-Solomon replié, qui est défini comme suit :

- soit F un corps fini de cardinal q $(\mathcal{F} = GF(q))$, et $\gamma$ un générateur de F,
- la version repliée m-fois du code de Reed Solomon C[u,k], notée $FRS_{\mathcal{F},\gamma,m,N,k}$ est un code de taille de bloc $N = \frac{u}{m}$ sur $\mathcal{F}^m$ où u=q-1 est divisible par m.
- le codage d'un message $p \in \mathcal{F}[X]$ de degré au maximum k-1 est donné par l'application de la fonction d'évaluation ev(f) = f(P1, ...,PN), où $P_i = \gamma^{m(i-1)}$

$$\text{et } f(x) = \left( \begin{bmatrix} p(x) \\ \vdots \\ p(x \times \gamma^{m-1}) \end{bmatrix} \right)$$

Dans le cas d'un code d'évaluation de type code de Reed-Solomon replié, les fonctions d'encodage $F_j$ correspondant aux données $A^j$ sont alors définies comme suit :

- Soit $f_j$ une fonction choisie aléatoirement dans F[X], par exemple, il peut s'agir d'un polynôme de degré k-1,
- On a $F_j(x_i) = f_j(P_i)$, où $P_i = \gamma^{m(i-1)}$. $F_j(x_i)$ est la ième coordonnée du mot de code $ev(f_j)$.

*Encodage des données dans un ensemble protégé*

De retour à la figure 1, le serveur génère au cours d'une étape d'encodage 120, à partir des fonctions d'encodage, un ensemble protégé LOCK ($A^j$) dans lequel sont cryptées les données de la base.

Pour ce faire, le serveur génère au cours d'une étape 121 autant d'ensembles Si que de symboles dans l'alphabet $\varepsilon$, chaque ensemble Si correspondant à un élément $X_i$ de l'alphabet $\varepsilon$.

Le serveur définit en outre deux paramètres de sécurité, $\ell$ et r.

Le premier paramètre de sécurité, e, est un entier associé à un ensemble indexé $S_i$. Cet entier peut varier d'un ensemble Si à l'autre, ou bien être le même pour l'intégralité des ensembles $S_i$.

Le deuxième paramètre de sécurité, r, est également un entier. Son rôle est décrit plus en détails dans la suite.

A l'initialisation de l'algorithme, les ensembles Si ne contiennent aucun élément.

Puis, pour chaque symbole $X_i$ de l'alphabet $\varepsilon$,

- pour chaque donnée $A^j$ de la base,

  o si $x_i \in A^j$ alors le serveur calcule l'image du symbole $x_i$ par la fonction d'encodage $F_j$ correspondant à la donnée $A^j$, $F_j(x_i)$, au cours d'une étape 122. Comme indiqué précédemment, cette image est une coordonnée d'un mot de code, fonction de la donnée $A^j$ et du symbole $x_i$ de l'alphabet $\varepsilon$. Le serveur ajoute cette valeur à l'ensemble Si correspondant au symbole $x_i$.

- Puis, le serveur ajoute à l'ensemble indexé $S_i$ des points parasites ou inducteurs d'erreurs, au cours d'une étape 123, jusqu'à ce que le cardinal de l'ensemble indexé Si atteigne l'entier $\ell$ déterminé auparavant.

Les points inducteurs d'erreurs sont choisis aléatoirement dans l'ensemble Y privé des images des symboles de l'alphabet $\varepsilon$ par les fonctions d'encodage $F_j$ correspondant aux données $A^j$. Ainsi, ces points inducteurs d'erreurs sont indépendants des fonctions d'encodage.

Ces points inducteurs d'erreurs empêchent d'identifier les mots de code authentiques. Ils empêchent donc la détermination des fonctions d'encodage $F_j$ des données Aj à partir des symboles de l'alphabet $\varepsilon$ et des mots de codes.

L'entier $\ell$ est un paramètre de sécurité du procédé de cryptage. Sa valeur dépend de l'algorithme de décryptage que l'on souhaite utiliser ultérieurement, et du temps de calcul que l'on tolère. Dans le cas où l'on choisit d'utiliser un code de Reed-Solomon replié, l'entier $\ell$ est typiquement inférieur à m, m étant l'un des paramètres du code de Reed-Solomon replié, et également inférieur au nombre n de données $A^j$ de la base.

Par ailleurs, le serveur tient un compteur du nombre d'ensemble indexés Si non vides, ce compteur étant incrémenté de 1 si un symbole $x_i$ de l'alphabet $\varepsilon$ est présent dans au moins une des données $A^j$. On appelle cpt la valeur de compteur.

A l'issue de ces premières étapes 122, 123, il peut rester des ensembles indexés Si vides, si le symbole de l'alphabet $x_i$ correspondant n'est présent dans aucune donnée $A^j$ de la base.

Le serveur choisit alors aléatoirement, au cours d'une étape 124, des index $i_e$, $i_{e} = \{i_{cpt+1}, ... , i_r\}$, tels que les ensembles indexés $S_{i_e}$ sont vides, et ajoute à ces ensembles des points parasites, ou inducteurs d'erreurs, jusqu'à ce que le cardinal de chaque ensemble indexé $S_{i_e}$ atteigne la valeur $\ell$.

Ici encore, les points inducteurs d'erreurs sont choisis dans Y privé des images des symboles de l'alphabet par les fonctions d'encodage $F_j$ correspondant aux données $A_j = (Y \backslash \{\mathcal{F}_d(x_{i_e})\}_{d=1,...,n})$.

A l'issue de l'étape 123, il reste N-r ensembles Si vides.

Le paramètre de sécurité r représente donc le nombre d'ensembles indexés Si non vides à la fin de l'étape de cryptage 120.

r est un entier positif, inférieur à N le nombre de symboles dans l'alphabet ε, choisi en fonction du nombre de données $A^j$ de la base. De préférence, on a choisi r, de sorte que r présente le même ordre de grandeur que N, le nombre de symboles dans l'alphabet. On peut même avoir r=N, de sorte qu'il ne reste aucun ensemble vide au cours de l'étape 120 de cryptage.

A titre d'exemple non limitatif, N peut présenter un ordre de grandeur de $10^4$, et alors r est de préférence compris entre quelques milliers et la valeur de N, de l'ordre de quelques dizaines de milliers.

Cette étape 124 d'ajout de points inducteurs d'erreurs dans des ensembles $S_{i_e}$ ne comprenant aucun mot de code permet de conférer à l'algorithme de cryptage une sécurité supplémentaire, car ces ensembles $S_{i_e}$ empêchent de déterminer quels symboles de l'alphabet sont présents dans les données $A^j$ de la base.

L'algorithme mathématique des étapes 121 à 124 est annexé en figure 1 b.

Enfin, au cours d'une étape 125, le serveur brouille les éléments de chaque ensemble indexé $S_i$. Ce brouillage est mis en oeuvre par réindexation aléatoire des éléments au sein de chaque ensemble $S_i$.

En effet, les mots de code ayant été ajoutés en premier aux ensembles Si, leur position dans ces ensembles permettrait de les identifier. Le brouillage permet ainsi aux mots de codes d'avoir une position aléatoire dans les ensembles $S_i$.

On ajoute enfin, au cours d'une étape 126, des couples constitués d'un symbole de l'alphabet et d'un ensemble indexé correspondant, à l'ensemble protégé LOCK, et ce pour chaque symbole de l'alphabet.

A des fins probatoires développées ci-après, le serveur peut également, au cours d'une étape 127, calculer l'image par une fonction de hachage publique *Hash* de chaque fonction d'encodage $F_j$ qui a servi à générer les mots de code, et intégrer ces images $Hash(F_j)$ dans l'ensemble LOCK, qu'on écrit alors $LOCK(A^j, Hash(F_j))$.

*Décryptage*

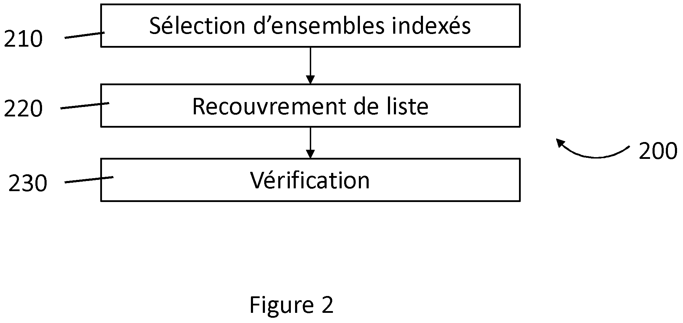

Une fois les données $A^j$ cryptées dans l'ensemble LOCK, cet ensemble est utilisé pour déterminer, à partir d'une donnée B, la donnée $A^j$ présentant le plus de similarités avec la donnée B, et ce, sans fournir d'information sur les données $A^j$. C'est cette étape 200 qui est appelée décryptage, et dont les étapes sont illustrées en figure 2.

La donnée B est une liste de t éléments {$b_1$,..., $b_t$}, dont chaque élément $b_i$ est un symbole $x_i$ de l'alphabet ε.

Un serveur devant procéder au décryptage sélectionne au cours d'une étape 210, parmi les ensembles indexés Si stockés dans l'ensemble LOCK, ceux $S_{i_e}$ correspondant à des éléments $x_{i_e}$ inclus dans B, c'est-à-dire les ensembles $S_{i_e}$ dont les index $i_e$ sont tels que $x_{i_e} = b_e$, pour e =1,..,t.

Le serveur met ensuite en oeuvre un algorithme de recouvrement de liste ayant pour entrée l'ensemble des couples {$(x_{i_1}, S_{i_1})$, ..., $(x_{i_t}, S_{i_t})$}, pendant une étape 220.

Cet algorithme de recouvrement de liste dépend du code choisi pour crypter les données $A^j$. Dans le cas où le code est un code de Reed-Solomon replié, un algorithme de recouvrement de liste adapté est l'algorithme de décryptage de liste de Guruswami, décrit dans la publication Venkatesan Guruswami, Linear-algebraic list decoding of folded Reed Solomon Codes, In IEEE Conference on Computational Complexity, pages 77-85. IEEE Computer Society, 2011.

L'algorithme de recouvrement de liste fournit pour résultat une liste de mots de code qui présentent un taux de similarité avec les ensembles indexés Si qui excèdent un seuil prédéterminé. De ces mots de codes, on déduit une ou plusieurs fonctions d'encodage qui correspondent à la ou les fonctions d'encodage $F_j$ des données $A^j$ qui présentent un taux de similarité avec la donnée B supérieure à un seuil prédéterminé.

En particulier, si la donnée B correspond à l'une des données $A^j$, la fonction d'encodage $F_j$ correspondant à cette donnée $A^j$ est obtenue à partir des résultats de l'algorithme de recouvrement de liste.

Les fonctions résultats de cet algorithme sont telles que, pour une proportion des $x_{i_e}$ tels que $x_{i_e} = b_e$, ladite proportion étant déterminée à partir du seuil de similarité entre les données $A^j$ et la donnée B, on a $F_j(x_{i_e}) \in S_{i_e}$, ce qui n'est le cas que pour les $A^j$ similaires à B.

Si l'on souhaite obtenir la preuve qu'une fonction résultat de cet algorithme est bel et bien une fonction d'évaluation d'une donnée $A^j$ correspondant, le serveur peut calculer au cours d'une étape 230 de vérification l'image de cette fonction résultat par la fonction de hachage publique Hash mentionnée ci-avant, et comparer ce résultat avec les hachages de chacune des données $A^j$ qui sont stockés dans l'ensemble protégé LOCK.

Enfin, à partir de la fonction d'encodage $F_j$, le serveur peut retrouver la donnée $A^j$. Pour ce faire, on calcule l'image de tous les symboles $x_i$ par la fonction d'encodage $F_j$, et on détermine si $F_j(x_i)$ appartient à l'ensemble indexé $S_i$. Si c'est le cas, alors $x_i$ appartient à la donnée $A_j$. On peut donc reconstruire la donnée $A_j$.

*Application à l'identification biométriaue*

Une application préférentielle de cet algorithme de cryptage et de l'algorithme de décryptage correspondant est celle de l'identification biométrique.

L'identification biométrique est illustrée schématiquement en figure 1 b.

L'identification d'un individu consiste en la comparaison d'une donnée propre à cet individu à des données analogues d'individus référencés, afin de déterminer si l'individu à identifier correspond à l'un des individus référencés avec un taux de similarité excédant un seuil prédéterminé.

Les individus référencés peuvent être par exemple des individus dont l'accès à un lieu est autorisé, ou alternativement des individus recherchés par les forces de l'ordre.

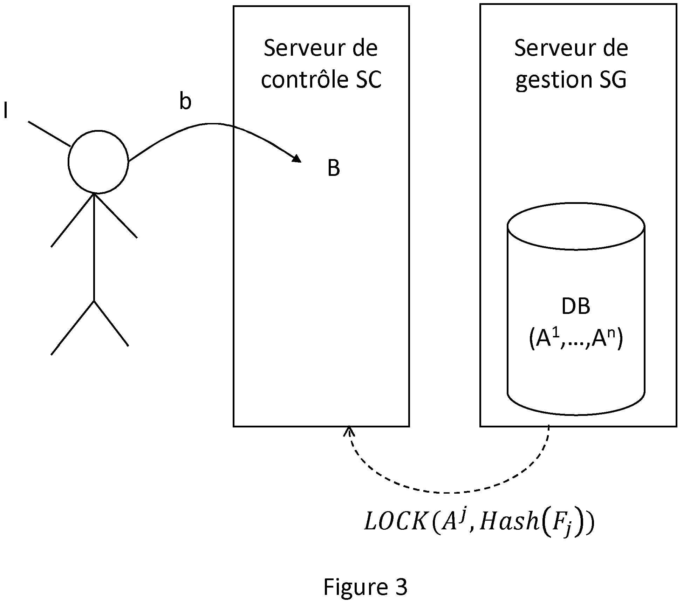

Par exemple, sur la figure 3, la donnée B est une acquisition codée en binaire, par un serveur de contrôle SC, d'un caractère biométrique b de l'individu que l'on désire identifier.

Ce caractère biométrique peut par exemple être un iris ou une empreinte digitale.

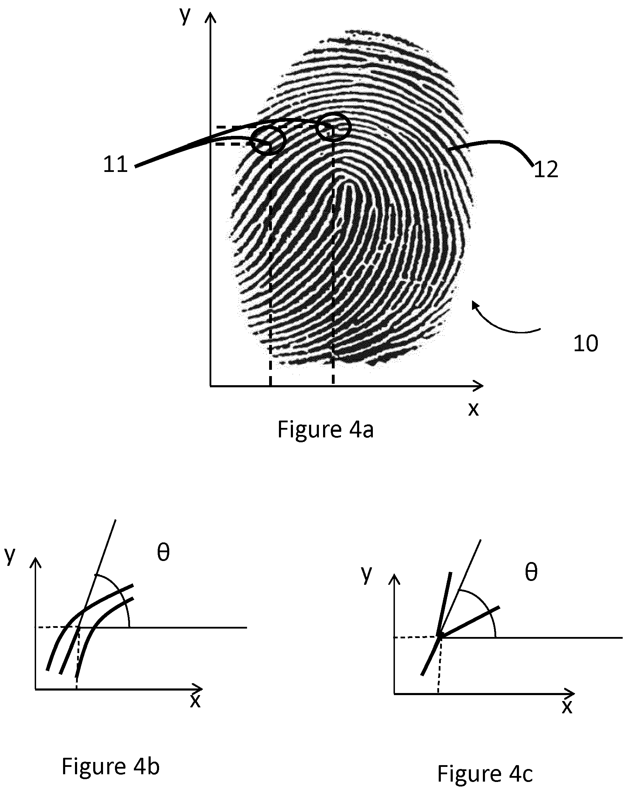

En référence à la figure 4, on a illustré la façon dont sont codées les empreintes digitales. Une empreinte 10 illustrée en figure 4a se caractérise par des irrégularités appelées minuties 11 sur les lignes 12 qui les composent. Les minuties 11 peuvent être par exemple des fins de lignes ou des bifurcations.

Le nombre, la forme et la position des minuties sur une empreinte digitale 10 rendent cette empreinte unique et spécifique de l'individu qui la porte. Par conséquent, ce sont les minuties qui sont utilisées pour coder une empreinte digitale.

Le codage d'une empreinte digitale 10 est un ensemble de triplets $(x, y, \theta)$ dans lesquels x et y indiquent l'abscisse et l'ordonnée d'une minutie sur un repère normalisé identifié en figure 4a, 4b et 4c, et $\theta$ est l'angle formé par la direction de la ligne 12 par rapport à l'axe des abscisses. Plus précisément, en figure 4b, la minutie représentée est une fin de ligne, et $\theta$ est l'angle entre la direction de la ligne avant de s'interrompre et l'axe des abscisses. En figure 4c, la minutie représentée une bifurcation, et $\theta$ est l'angle entre la direction de la ligne avant bifurcation et l'axe des abscisses.

x, y, et $\theta$ sont chacun codés sur un octet. L'alphabet $\varepsilon$ correspondant pour le procédé de cryptage est constitué de l'ensemble des triplets possibles dont chaque coordonnée est codée sur un octet. Il existe 256 ($2^8$) octets possibles donc l'alphabet $\varepsilon$ contient $N=256^3$ éléments.

De retour à la figure 3, des données biométriques $A^j$ d'individus référencés sont stockées dans une base de données DB gérée par un serveur de gestion SG.

Le serveur de gestion SG met en oeuvre le procédé de cryptage décrit ci-avant sur les données $A^j$ pour créer un ensemble protégé LOCK $(A^1,...,A^N)$.

Lorsqu'un individu se présente pour être identifié, le serveur de contrôle SC acquiert une donnée biométrique B, soit par un capteur d'empreinte digitale, soit par lecture d'une puce stockée dans un document d'identité.

Le serveur de contrôle SC met alors en oeuvre l'algorithme de décryptage décrit ci-avant pour déterminer quelle donnée $A^j$, si elle existe, correspond à la donnée B de l'individu avec un taux de similarité supérieur à un seuil prédéterminé.

On a donc développé un algorithme de cryptage permettant d'encoder dans un ensemble protégé une pluralité de données $A^j$. Cet algorithme constitue une extension du schéma fuzzy vault, ce dernier ne prévoyant pas de coder plusieurs données, a *fortiori* quand ces données présentent des éléments en commun.

Cet algorithme permet également de minimiser l'espace de stockage pour l'encodage des données, puisque les points inducteurs d'erreurs sont ajoutés pour l'ensemble des données.

En outre, il permet de ne réaliser qu'un seul décodage pour toutes les données, ce qui peut représenter un gain de temps de calcul, fonction de l'algorithme de recouvrement de liste utiliser.

**Revendications**

1. Procédé de cryptage d'un ensemble d'au moins deux données $(A^j)$ indexées mis en oeuvre par un serveur, les données $(A^j)$ étant sous la forme de listes d'éléments $(a_i^j)$, dont chaque élément appartient à un ensemble fini $(\varepsilon)$ de symboles $(x_i)$ indexés appelé alphabet,
le procédé étant **caractérisé en ce que** les données $(A^j)$ sont cryptées pour former un ensemble protégé $(LOCK (A^1,...,A^N))$, l'étape de cryptage et de création de l'ensemble protégé comprenant les étapes suivantes :

- le serveur génère aléatoirement, pour chaque donnée $(A^j)$ de la base, une fonction d'encodage $(F_j)$ correspondante, et
- pour chaque symbole $(x_i)$ de l'alphabet $(\varepsilon)$,

   o pour chaque donnée $(A^j)$,
   ■ si au moins un élément $(a_i^j)$ de la liste qui constitue la donnée est le symbole $(x_i)$ de l'alphabet, le serveur détermine l'image dudit symbole $(x_i)$ de l'alphabet par la fonction d'encodage $(F_j)$ correspondant à la donnée $(A^j)$ pour obtenir une coordonnée d'un mot de code $F_j(x_i)$, fonction de la donnée et du symbole de l'alphabet,
   ■ le serveur ajoute la coordonnée de mot de code $F_j(x_i)$ ainsi obtenue à un ensemble indexé $(S_i)$ correspondant à l'élément de l'alphabet $(x_i)$, l'ensemble étant de cardinal $(\ell)$ prédéterminé,

   o puis, le serveur réindexe aléatoirement les éléments de l'ensemble indexé $(S_i)$ correspondant au symbole $(x_i)$ de l'alphabet $(\varepsilon)$, et
   o le serveur ajoute à l'ensemble protégé $(LOCK (A^1,...,A^N))$ l'ensemble indexé $(Si)$ correspondant au symbole $(x_i)$ de l'alphabet.

et **en ce que**, pour chaque symbole $(x_i)$ de l'alphabet $(\varepsilon)$, préalablement à l'étape de réindexation, le serveur complète l'ensemble indexé ($S_i$) correspondant à l'élément ($x_i$) de l'alphabet avec des points inducteurs d'erreurs.

**2.** Procédé selon la revendication 1, dans lequel, pour les symboles ($x_i$) de l'alphabet ne correspondant à aucun élément des données de la base,

    - le serveur sélectionne aléatoirement certains desdits éléments ($x_i$),
    - pour chaque élément ($x_{ie}$) sélectionné, il crée un ensemble ($S_{ie}$) de cardinal prédéterminé d'index correspondant à celui de l'élément ($x_{ie}$), et il ajoute à cet élément ($x_{ie}$) autant de points inducteurs d'erreur que le cardinal de l'élément.

**3.** Procédé selon la revendication précédente, dans lequel les symboles ($x_i$) de l'alphabet ($\varepsilon$) non sélectionnés sont associés à un ensemble vide.

**4.** Procédé selon l'une des revendications 2 à 3, dans lequel les points inducteurs d'erreurs sont des points générés aléatoirement parmi un ensemble ($Y$) de destination des fonctions d'encodage, privé des images $F_j(x_i)$ des symboles ($x_i$) de l'alphabet ($\varepsilon$) par les fonctions d'encodage ($F_j$) correspondant aux données ($A^j$).

**5.** Procédé selon l'une des revendications précédentes, dans lequel les fonctions d'encodage correspondant aux données ($F_j$) sont associées à un code d'évaluation pour lequel il existe au moins un algorithme de récupération de liste.

**6.** Procédé selon la revendication précédente, dans lequel le code d'évaluation est un code de Reed-Solomon replié, un code de Reed-Muller, ou un code algébrique.

**7.** Procédé selon l'une des revendications précédentes, dans lequel le serveur calcule l'image ($Hash(F_j)$) de chaque fonction d'encodage ($F_j$) correspondant à une donnée ($A^j$) par une fonction de hachage publique *(Hash),* et ajoute ladite image à l'ensemble protégé.

**8.** Procédé de cryptage selon l'une des revendications précédentes, dans lequel les données ($A^j$) sont des données biométriques.

**9.** Procédé de cryptage selon la revendication précédente, dans lequel les données ($A^j$) biométriques comprennent des informations relatives aux empreintes digitales d'individus, lesdites données étant sous la forme de listes de triplets ($x, y, \theta$) de coordonnées de minuties d'empreintes digitales des individus.

**10.** Procédé de cryptage selon l'une des revendications précédentes, dans lequel chaque coordonnée d'un triplet ($x, y, \theta$) est codée sur un octet, et l'alphabet contient l'ensemble des configurations possibles de triplets dont chaque coordonnée est codée sur un octet.

**11.** Procédé d'identification d'un individu ($I$) dans un système comprenant un serveur de contrôle ($SC$), adapté pour acquérir une donnée biométrique ($B$) de l'individu ($I$) à identifier, et un serveur de gestion ($SG$) d'une base ($DB$) de données biométriques indexées d'individus répertoriés,
dans lequel, pour identifier l'individu ($I$), on compare sa donnée ($B$) avec les N données ($A^j$) de la base ($DB$), afin d'identifier la ou les données ($A^j$) de la base présentant un taux de similarités avec la donnée de l'individu excédant un seuil prédéterminé,
le procédé étant **caractérisé en ce que**, avant l'étape de comparaison de la donnée de l'individu avec les données de la base, celles-ci sont cryptées par le serveur de gestion ($SG$) par mise en oeuvre du procédé selon l'une des revendications précédentes.

**12.** Procédé selon la revendication précédente, dans lequel la donnée biométrique ($B$) de l'individu à identifier est sous la forme d'une liste d'éléments ($b_i$) dont chaque élément ($b_i$) est un symbole ($x_i$) de l'alphabet ($\varepsilon$), et dans lequel le serveur de gestion communique l'ensemble protégé ($LOCK(A^1,...,A^N)$) au serveur de contrôle ($SC$), et, à partir de la donnée biométrique ($B$) de l'individu à identifier, le serveur de contrôle ($SC$) met en oeuvre une étape de décryptage de l'ensemble protégé ($LOCK(A^1,...,A^N)$), l'étape de décryptage comprenant les étapes consistant à :

    - sélectionner un sous-ensemble de l'ensemble protégé ($LOCK(A^1,...,A^N)$) comprenant tous les ensembles indexés ($S_i$) correspondant aux symboles ($x_i$) de l'alphabet ($\varepsilon$) présents dans la liste d'éléments ($b_i$) qui constitue la donnée ($B$) de l'individu ($I$),
    - mettre en oeuvre un algorithme de recouvrement de liste ayant pour argument ledit sous-ensemble sélectionné et pour résultat un ensemble de fonctions d'encodage tel que, si la donnée ($B$) de l'individu correspond à une donnée de la base ($A^j$), l'ensemble de fonctions d'encodage contient la fonction d'encodage ($F_j$) correspondant à ladite donnée ($A^j$).

**13.** Procédé selon la revendication précédente dans lequel, à partir de la ou des fonctions d'encodage obtenues, le serveur de contrôle détermine la ou les données ($A^j$) de la base ($DB$) correspondant à la donnée ($B$) de l'individu avec un taux de similarité supérieur à un seuil prédéterminé.

**14.** Procédé selon l'une des revendications 12 ou 13, dans lequel le serveur de contrôle (SC) détermine l'image des fonctions d'encodage de l'ensemble résultant de l'algorithme de récupération de liste par la fonction de hachage (Hash) publique, et compare cette image aux images des fonctions d'encodage correspondant aux données de la base contenues dans l'ensemble protégé (LOCK ($A^1$,...,$A^N$)).

**Patentansprüche**

**1.** Verfahren zur Verschlüsselung einer Menge von mindestens zwei indizierten Datenelementen ($A^j$), das durch einen Server durchgeführt wird, wobei die Datenelemente ($A^j$) die Form von Listen von Elementen ($a_i^j$) aufweisen, von denen jedes Element zu einer endlichen Menge ($\varepsilon$) von indizierten Symbolen ($x_i$) gehört, die Alphabet genannt wird, wobei das Verfahren **dadurch gekennzeichnet ist, dass** die Datenelemente ($A^j$) verschlüsselt werden, um eine geschützte Menge (LOCK ($A^j$, ..., $A^N$)) zu bilden, wobei der Schritt der Verschlüsselung und der Erzeugung der geschützten Menge die folgenden Schritte umfasst:

- der Server erzeugt zufällig für jedes Datenelement ($A^j$) der Bank eine entsprechende Codierungsfunktion ($F_j$), und
- für jedes Symbol ($x_i$) des Alphabets ($\varepsilon$),

 o für jedes Datenelement ($A^j$)

  ■ wenn mindestens ein Element ($a_i^j$) der Liste, die das Datenelement bildet, das Symbol ($x_i$) des Alphabets ist, bestimmt der Server das Bild des Symbols ($x_i$) des Alphabets durch die Codierungsfunktion ($F_j$), die dem Datenelement ($A^j$) entspricht, um eine Koordinate eines Codeworts $F_j(x_i)$ zu erhalten, die eine Funktion des Datenelements und des Symbols des Alphabets ist,
  ■ fügt der Server die Koordinate des so erhaltenen Codeworts $F_j(x_i)$ zu einer indizierten Menge ($S_i$) hinzu, die dem Element des Alphabets ($x_i$) entspricht, wobei die Menge eine vorbestimmte Mächtigkeit ($\ell$) aufweist,

 o indiziert der Server dann zufällig die Elemente der indizierten Menge ($S_i$) neu, die dem Symbol ($x_i$) des Alphabets ($\varepsilon$) entspricht, und

 o fügt der Server der geschützten Menge (LOCK ($A^1$, ..., $A^N$)) die indizierte Menge ($S_i$) hinzu, die dem Symbol ($x_i$) des Alphabets entspricht,

und dadurch, dass für jedes Symbol ($x_i$) des Alphabets ($\varepsilon$) der Server vor dem Schritt der Neuindizierung die indizierte Menge ($S_i$), die dem Element ($x_i$) des Alphabets entspricht, mit Fehler induzierenden Punkten ergänzt.

**2.** Verfahren nach Anspruch 1, wobei für die Symbole ($x_i$) des Alphabets, die keinem Element der Datenelemente der Bank entsprechen,

- der Server zufällig bestimmte der Elemente ($x_i$) auswählt,
- er für jedes ausgewählte Element ($x_{ie}$) eine Menge ($S_{ie}$) mit vorbestimmter Mächtigkeit mit einem Index erzeugt, der demjenigen des Elements ($x_{ie}$) entspricht, und er diesem Element ($x_{ie}$) eine Anzahl Fehler induzierende Punkte hinzufügt, die der Mächtigkeit des Elements entspricht.

**3.** Verfahren nach dem vorhergehenden Anspruch, wobei die nicht ausgewählten Symbole ($x_i$) des Alphabets ($\varepsilon$) mit einer leeren Menge verbunden werden.

**4.** Verfahren nach einem der Ansprüche 2 bis 3, wobei die Fehler induzierenden Punkte Punkte sind, die zufällig unter einer Zielmenge (Y) der Codierungsfunktionen ohne die Bilder $F_j(x_i)$ der Symbole ($x_i$) des Alphabets ($\varepsilon$) durch die Codierungsfunktionen ($F_j$) erzeugt werden, die den Datenelementen ($A^j$) entsprechen.

**5.** Verfahren nach einem der vorhergehenden Ansprüche, wobei die Codierungsfunktionen, die den Datenelementen ($F_j$) entsprechen, mit einem Bewertungscode verbunden werden, für den mindestens ein Listenwiedergewinnungsalgorithmus vorhanden ist.

**6.** Verfahren nach dem vorhergehenden Anspruch, wobei der Bewertungscode ein Reed-Solomon-Faltungscode, ein Reed-Muller-Code oder ein algebraischer Code ist.

**7.** Verfahren nach einem der vorhergehenden Ansprüche, wobei der Server das Bild (Hash($F_j$)) jeder Codierungsfunktion ($F_j$), die einem Datenelement ($A^j$) entspricht, durch eine öffentliche Hash-Funktion *(Hash)* berechnet und das Bild zu der geschützten Menge hinzufügt.

**8.** Verschlüsselungsverfahren nach einem der vorhergehenden Ansprüche, wobei die Datenelemente (A$^j$) biometrische Datenelemente sind.

9. Verschlüsselungsverfahren nach dem vorhergehenden Anspruch, wobei die biometrischen Datenelemente (A$^j$) Informationen umfassen, die die Fingerabdrücke von Einzelpersonen betreffen, wobei die Datenelemente die Form von Listen von Triplets (x, y, θ) von Koordinaten von Fingerabdruckmerkmalen von Fingerabdrücken der Einzelpersonen aufweisen.

10. Verschlüsselungsverfahren nach einem der vorhergehenden Ansprüche, wobei jede Koordinate eines Triplets (x, y, θ) auf einem Byte codiert ist und das Alphabet die Menge der möglichen Konfigurationen von Triplets enthält, von denen jede Koordinate auf einem Byte codiert ist.

11. Verfahren zur Identifizierung einer Einzelperson (I) in einem System, das einen Steuerserver (SC), der angepasst ist, um ein biometrisches Datenelement (B) der zu identifizierenden Einzelperson (I) zu erfassen, und einen Verwaltungsserver (SG) einer Bank (DB) mit indizierten biometrischen Datenelementen von erfassten Einzelpersonen umfasst, wobei zum Identifizieren der Einzelperson (I) ihr Datenelement (B) mit den N Datenelementen (A$^j$) der Bank (DB) verglichen wird, um das oder die Datenelemente (A$^j$) der Bank zu identifizieren, das/die einen Ähnlichkeitsgrad mit dem Datenelement der Einzelperson aufweist/aufweisen, der einen vorbestimmten Schwellenwert überschreitet, wobei das Verfahren **dadurch gekennzeichnet ist, dass** vor dem Schritt des Vergleichens des Datenelements der Einzelperson mit den Datenelementen der Bank diese durch den Verwaltungsserver (SG) durch Durchführen des Verfahrens nach einem der vorhergehenden Ansprüche verschlüsselt werden.

12. Verfahren nach dem vorhergehenden Anspruch, wobei das biometrische Datenelement (B) der zu identifizierenden Einzelperson die Form einer Liste von Elementen (b$_i$) aufweist, von denen jedes Element (b$_i$) ein Symbol (x$_i$) des Alphabets (ε) ist, und wobei der Verwaltungsserver die geschützte Menge (LOCK (A$^1$, ..., A$^N$)) an den Steuerserver (SC) kommuniziert und der Steuerserver (SC) ausgehend von dem biometrischen Datenelement (B) der zu identifizierenden Einzelperson einen Schritt zur Entschlüsselung der geschützten Menge (LOCK (A$^1$, ..., A$^N$)) durchführt, wobei der Entschlüsselungsschritt die Schritte umfasst, die aus Folgendem bestehen:

- Auswählen einer Teilmenge der geschützte Menge (LOCK (A$^1$, ..., A$^N$)), die sämtliche indizierten Mengen (S$_i$) umfasst, die den Symbolen (x$_i$) des Alphabets (ε) entsprechen, die in der

Liste von Elementen (b$_i$) vorhanden sind, die das Datenelement (B) der Einzelperson (I) bildet,
- Durchführen eines Listenwiedergewinnungsalgorithmus, der als Argument die ausgewählte Teilmenge und als Ergebnis eine Menge von Codierungsfunktionen aufweist, derart dass, wenn das Datenelement (B) der Einzelperson einem Datenelement der Bank (A$^j$) entspricht, die Menge von Codierungsfunktionen die Codierungsfunktion (F$_j$) enthält, die dem Datenelement (A$^j$) entspricht.

13. Verfahren nach dem vorhergehenden Anspruch, wobei der Steuerserver ausgehend von der oder den erhaltenen Codierungsfunktionen das oder die Datenelement/e (A$^j$) der Bank (DB) bestimmt, das/die dem Datenelement (B) der Einzelperson mit einem Ähnlichkeitsgrad entspricht/entsprechen, der höher als ein vorbestimmter Schwellenwert ist.

14. Verfahren nach einem der Ansprüche 12 oder 13, wobei der Steuerserver (SC) das Bild der Codierungsfunktionen der Menge, die aus dem Listenwiedergewinnungsalgorithmus resultiert, durch die öffentliche Hash-Funktion *(Hash)* bestimmt und dieses Bild mit den Bildern der Codierungsfunktionen vergleicht, die den Datenelementen der Bank entsprechen, die in der geschützten Menge (LOCK (A$^1$, ..., A$^N$)) enthalten sind.

**Claims**

1. Method for encrypting a set of at least two indexed data items (A$^j$), implemented by a server, the data (A$^j$) being in the form of lists of elements $\mathcal{F}$ each element of which belongs to a finite set (ε) of indexed symbols (x$_i$) called an alphabet,

the method being **characterised in that** the data (A$^j$) are encrypted to form a protected set (LOCK (A$^1$,...,A$^N$)), the step of encrypting and creating the protected set comprising the following steps:

- the server randomly generates, for each data item (A$^j$) in the base, a corresponding encoding function (F$_j$), and
- for each symbol (x$_i$) of the alphabet (ε),

o for each data item (A$^j$),
■ if at least one element $\mathcal{F}$ of the list that constitutes the data item is the symbol (x$_i$) of the alphabet, the server determines the image of said symbol (x$_i$) of the alphabet via the encoding function (F$_j$) corresponding to the data item (A$^j$) in order to obtain a codeword

coordinate $F_j(x_i)$ that is a function of the data item and of the symbol of the alphabet,

■ the server adds the codeword coordinate $F_j(x_i)$ thereby obtained to an indexed set $(S_i)$ corresponding to the element of the alphabet $(x_i)$, the set having a predetermined cardinal $(\ell)$,

o then the server randomly re-indexes the elements of the indexed set $(S_i)$ corresponding to the symbol $(x_i)$ of the alphabet $(\varepsilon)$, and
o the server adds the indexed set $(S_i)$ corresponding to the symbol $(x_i)$ of the alphabet to the protected set (LOCK $(A^1,...,A^N)$),

and **in that**, for each symbol $(x_i)$ in the alphabet $(\varepsilon)$, prior to the re-indexing step, the server completes the indexed set $(S_i)$ corresponding to the alphabet element $(x_i)$ with error-inducing points.

2. Method according to claim 1, in which, for the symbols $(x_i)$ of the alphabet that do not correspond to any element of the data in the base,

- the server randomly selects some of said elements $(x_i)$,
- for each element $(x_{ie})$ selected, it creates a predetermined cardinal set $(S_{ie})$ with an index corresponding to that of the element $(x_{ie})$, and adds to this element $(x_{ie})$ as many error-inducing points as the cardinal of the element.

3. Method according to the preceding claim, in which the non-selected symbols $(x_i)$ of the alphabet $(\varepsilon)$ are associated with an empty set.

4. Method according to one of claims 2 to 3, in which the error-inducing points are points generated randomly among a destination set (Y) of the encoding functions, deprived of the images $F_j(x_i)$ of the symbols $(x_i)$ of the alphabet $(\varepsilon)$ by the encoding functions $(F_j)$ corresponding to the data $(A^j)$.

5. Method according to one of the preceding claims, in which the encoding functions corresponding to the data $(F_j)$ are associated with an evaluation code for which there exists at least one list recovery algorithm.

6. Method according to the preceding claim, in which the evaluation code is a folded Reed-Solomon code, a Reed-Muller code or an algebraic code.

7. Method according to one of the preceding claims, in which the server computes the image $(Hash(F_j))$ of each encoding function $(F_j)$ corresponding to a data item $(A^j)$ by means of a public hash function *(Hash)*, and adds said image to the protected set.

8. Encrypting method according to one of the preceding claims, in which the data $(A^j)$ are biometric data.

9. Encrypting method according to the preceding claim, in which the biometric data $(A^j)$ comprise information relating to the fingerprints of individuals, said data being in the form of lists of triplets $(x, y, \theta)$ of coordinates of minutiae of fingerprints of individuals.

10. Encrypting method according to one of the preceding claims, in which each coordinate of a triplet $(x, y, \theta)$ is coded on one byte, and the alphabet contains all the possible configurations of triplets each coordinate of which is coded on one byte.

11. Method for identifying an individual (I), in a system comprising a control server (SC), suitable for acquiring a biometric data item (B) of the individual (I) to be identified, and a server (SG) managing a base (DB) containing individual biometric data of listed individuals,
in which, in order to identify the individual (I), his data item (B) is compared with the N data $(A^j)$ in the base (DB) in order to identify the data item $(A^j)$ or items in the base having a degree of similarity with the data item of the individual exceeding a predetermined threshold,
the method being **characterised in that**, before the step of comparing the data item of the individual with the data in the base, these are encrypted by the management server (SG) using the method according to one of the preceding claims.

12. Method according to the preceding claim, in which the biometric data item (B) of the individual to be identified is in the form of a list of elements $(b_i)$, each element $(b_i)$ of which is a symbol $(x_i)$ of the alphabet $(\varepsilon)$, and in which the management server communicates the protected set (LOCK $(A^1,...,A^N)$) to the control server (SC) and, from the biometric data item (B) of the individual to be identified, the control server (SC) implements a step of decrypting the protected set (LOCK $(A^1,..., AN)$), the decrypting step comprising the steps consisting of:

- selecting a subset of the protected set (LOCK $(A^1,...,A^N)$) comprising all the indexed sets $(S_i)$ corresponding to the symbols $(x_i)$ of the alphabet $(\varepsilon)$ present in the list of elements $(b_i)$ that constitutes the data item (B) of the individual (I),
- using a list recovery algorithm the argument of which is said selected subset and the result of which is a set of encoding functions such that, if the data item (B) of the individual corresponds to a data item ($A^j$) in the base, the set of encoding functions contains the encoding function ($F_j$) corresponding to said data item ($A^j$).

13. Method according to the preceding claim, in which, from the encoding function or functions obtained, the control server determines the data item or items ($A^j$) in the base (DB) corresponding to the data item (B) of the individual with a degree of similarity greater than a predetermined threshold.

14. Method according to one of claims 12 or 13, in which the control server (SC) determines the image of the encoding functions of the set resulting from the list recovery algorithm by means of the public hash function *(Hash)*, and compares this image with the images of the encoding functions corresponding to the data in the base contained in the protected set (LOCK ($A^1$,...,$A^N$)).

Génération de fonctions d'encodage —— 110

Encodage des données dans un
ensemble protégé —— 120

121 —— Génération d'ensembles indexés

122 —— Génération de mots de code

123 —— Masquage des mots de code par
points parasites

124 —— Masquage des symboles présents
dans les données par points
parasites

100

125 —— Brouillage des ensembles indexés

126 —— Remplissage de l'ensemble protégé

Figure 1a

Initialize a counter $cpt \leftarrow 0$ and the sets $S_1, \ldots, S_N$ to the empty set:
$S_i \leftarrow \emptyset$, $i = 1, \ldots, N$
for $i = 1$ to $N$ do
  for $j = 1$ to $l$ do
    if $x_i \in A^j$ then
      $S_i \leftarrow S_i \cup \{F_j(x_i)\}$
    end
  end
  set $l_i \leftarrow \#S_i$
  if $l_i \neq 0$ then
    $cpt \leftarrow cpt + 1$
    for $j = l_i + 1$ to $\ell$ do
      let $y_i^j$ randomly chosen in $Y \setminus \{F_d(x_i)\}_{d=1,\ldots,l}$
      let $S_i \leftarrow S_i \cup \{y_i^j\}$
    end
  end
end
randomly choose $i_{cpt+1}, \ldots, i_r$ such that $\#S_{i_e} = 0$ for $e \in| \{cpt + 1, \ldots, r\}$
for $e = cpt + 1$ to $r$ do
  for $j = 1$ to $\ell$ do
    let $y_{i_e}^j$ randomly chosen in $Y \setminus \{F_d(x_{i_e})\}_{d=1,\ldots,l}$
    let $S_{i_e} \leftarrow S_{i_e} \cup \{y_{i_e}^j\}$
  end
end


## Figure 1b

```
                    ┌─────────────────────────────────┐
210 ────────────────┤   Sélection d'ensembles indexés  │
                    └─────────────────────────────────┘
                                      │
                                      ▼
                    ┌─────────────────────────────────┐
220 ────────────────┤      Recouvrement de liste       │
                    └─────────────────────────────────┘
                                      │                      ⤷ 200
                                      ▼
                    ┌─────────────────────────────────┐
230 ────────────────┤           Vérification            │
                    └─────────────────────────────────┘
```

Figure 2

I

b

Serveur de
contrôle SC

B

Serveur de
gestion SG

DB
(A$^1$,...,A$^n$)

$$LOCK\left(A^{j}, Hash\left(F_{j}\right)\right)$$

Figure 3

Figure 4a

Figure 4b

Figure 4c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ARI JUELS ; MADHU SUDAN.** A fuzzy vault scheme. *In Proceedings of IEEE Internation Symposium on Information Theory, ISIT, Lecture Notes in Computer Science,* 2002, 408
- **ARI JUELS ; MADHU SUDAN.** A fuzzy vault scheme. *Des. Codes Cryptography,* 2006, vol. 38 (2), 237-257

- Linear-algebraic list decoding of folded Reed Solomon Codes. **VENKATESAN GURUSWAMI.** In IEEE Conference on Computational Complexity. IEEE Computer Society, 2011, 77-85